**Europäisches Patentamt**

**European Patent Office**

**Office européen des brevets**

(19)

(11) Numéro de publication : **0 315 522 B1**

(12)

# FASCICULE DE BREVET EUROPEEN

(45) Date de publication du fascicule du brevet :
06.11.91 Bulletin 91/45

(51) Int. Cl.⁵ : **F02K 1/70, F02K 1/11**

(21) Numéro de dépôt : **88402747.5**

(22) Date de dépôt : **03.11.88**

(54) Inverseur de poussée de turboréacteur à portes, à section variable d'éjection.

(30) Priorité : **05.11.87 FR 8715337**

(43) Date de publication de la demande :
**10.05.89 Bulletin 89/19**

(45) Mention de la délivrance du brevet :
**06.11.91 Bulletin 91/45**

(84) Etats contractants désignés :
**DE ES FR GB GR IT SE**

(56) Documents cités :
**EP-A- 0 067 747**
**US-A- 4 093 122**
**US-A- 4 194 692**

(73) Titulaire : **HISPANO-SUIZA Société anonyme dite:**
**333, Bureaux de la Colline**
**F-92213 Saint Cloud (FR)**

(72) Inventeur : **Durand, Lionel Fernand Georges Jean**
**Rue Louis Lumière**
**F-76290 Fontaine la Mallet (FR)**
Inventeur : **Lore, Xavier, Raymond Yves**
**57, avenue Léo Lagrange**
**F-76600 Le Havre (FR)**

(74) Mandataire : **Moinat, François**
**S.N.E.C.M.A. Service des Brevets Boîte Postale 81**
**F-91003 Evry Cédex (FR)**

## Description

La présente invention concerne un inverseur de poussée du flux secondaire d'un turboréacteur à double flux dans lequel les éléments déplaçables, constitués de portes ou de coquilles et formant les obstacles d'inversion en position déployée, forment, en position rétractée correspondant au fonctionnement du turboréacteur en poussée directe, l'extrémité aval de la paroi externe du canal annulaire de circulation de la veine de flux secondaire.

FR-A-1302154 décrit une tuyère de propulsion constituée de volets pivotants qui règlent la section de tuyère, d'une part, en pivotant autour d'axes situés en amont et qui permettent d'obtenir une inversion du flux, d'autre part, en pivotant autour d'axes situés en aval. Les applications de cette solution restent toutefois limitées à des principes de tuyère de section rectangulaire ou éventuellement prismatique.

US-A-4191692 décrit un ensemble intégré de tuyère d'éjection divergente réglable et d'inversion de poussée comportant des portes pivotantes. Les deux fonctions sont assurées par un vérin unique qui commande les déplacements de porte par l'intermédiaire de tringleries. Lors d'un réglage de convergence de tuyère correspondant à une recherche de diminution de section de sortie, la porte pivotant autour d'un pivot amont a un bord amont écarté de la partie fixe amont.

Par contre, le but de l'invention est d'obtenir dans un inverseur de poussée du flux secondaire du type rappelé ci-dessus, présentant une forme générale de révolution par rapport à l'axe de rotation du turboréacteur à double flux associé, la possibilité de faire varier la section de la tuyère d'éjection afin d'optimiser le rendement du moteur, notamment en obtenant une augmentation de la section de tuyère dans les phases de fonctionnement correspondant notamment au décollage de l'avion.

Ces résultats sont obtenus de manière remarquable par un inverseur de poussée d'un turboréacteur à double flux caractérisé en ce que chaque élément déplaçable est relié, par sa partie amont, en position rétractée, à la partie fixe amont de l'inverseur par un pivot secondaire et en ce que chaque pivot primaire est relié à la structure fixe de l'inverseur par une biellette-support dont l'autre extrémité est articulée à l'extrémité de la tige d'un vérin secondaire fixé en amont sur la structure fixe de l'inverseur de manière à obtenir une variation de la section de sortie de la tuyère secondaire d'éjection correspondant à l'extrémité aval desdits éléments déplaçables sous l'action desdits vérins secondaires par déplacement desdits pivots primaires.

Avantageusement le pivot secondaire constitue également un verrou de l'élément déplaçable en position rétractée.

En outre, ladite biellette-support de pivot primaire peut être bloquée par rapport à la structure fixe de l'inverseur par un verrou, dans les positions déployée et rétractée sans variation de la section de tuyère.

D'autres caractéristiques et avantages de l'invention seront mieux compris à la lecture qui va suivre de la description d'un mode de réalisation de l'invention, en référence aux dessins annexés sur lesquels :

— la figure 1 représente une vue schématique en perspective de la moitié d'un inverseur de poussée de turboréacteur à double flux conforme à l'invention ;

— la figure 2 montre une vue schématique en coupe longitudinale par un plan passant par l'axe de rotation du turboréacteur de l'inverseur de poussée, représenté à la figure 1, dans une position rétractée correspondant à un fonctionnement en poussée directe, durant une phase de croisière de l'avion ;

— la figure 3 montre une vue analogue à la figure 2 de l'inverseur de poussée représenté aux figures 1 et 2, dans une position déployée correspondant à un fonctionnement en inversion de poussée ;

— la figure 4 montre une vue analogue aux figures 2 et 3 de l'inverseur de poussée représenté aux figures 1 à 3, schématisant les positions obtenues en variation de section de tuyère et montrant, selon une vue ramenée dans le plan de la figure, le dispositif de manoeuvre correspondant;

— la figure 5 montre une vue d'une section transversale de l'inverseur de poussée, selon la ligne V-V de la figure 4, représenté aux figures 1 à 4 ;

— la figure 6 montre une vue d'une section transversale de l'inverseur de poussée représenté aux figures 1 à 4, selon la ligne VI-VI de la figure 4.

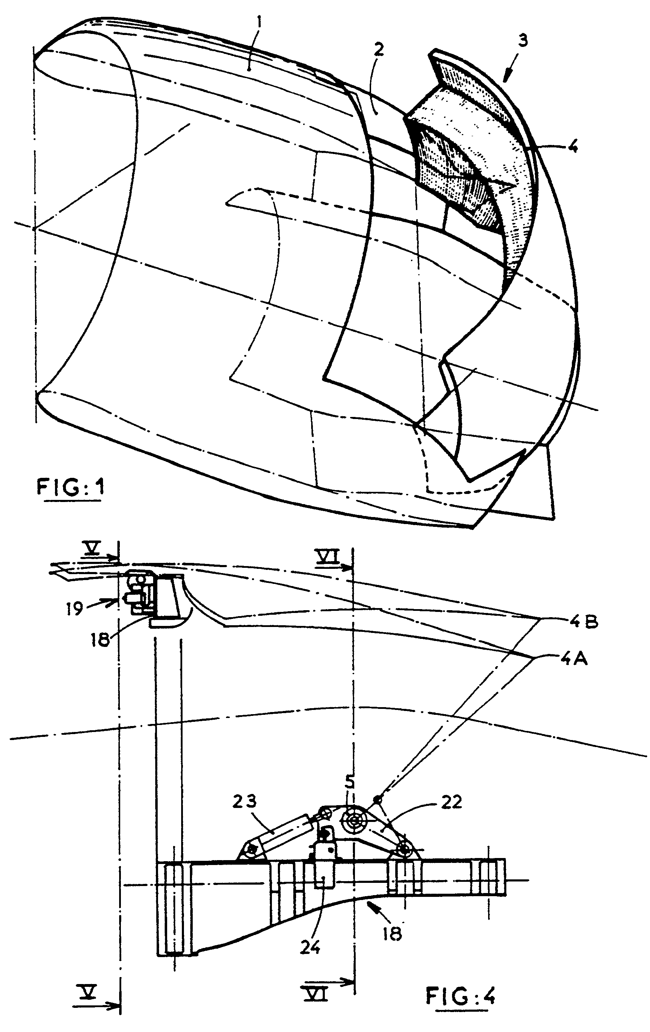

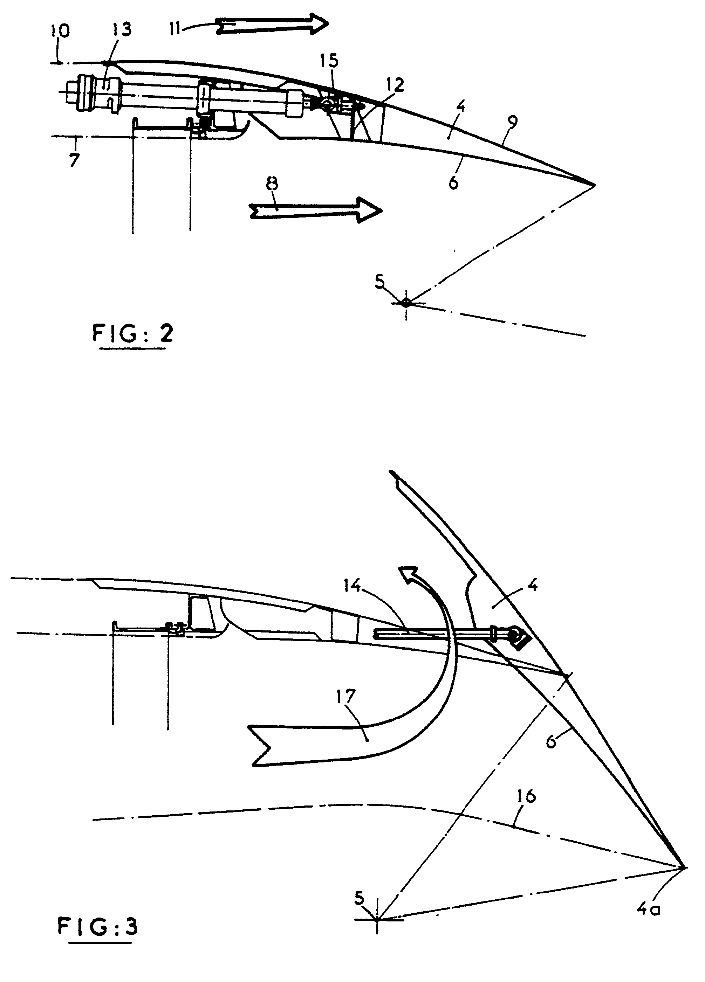

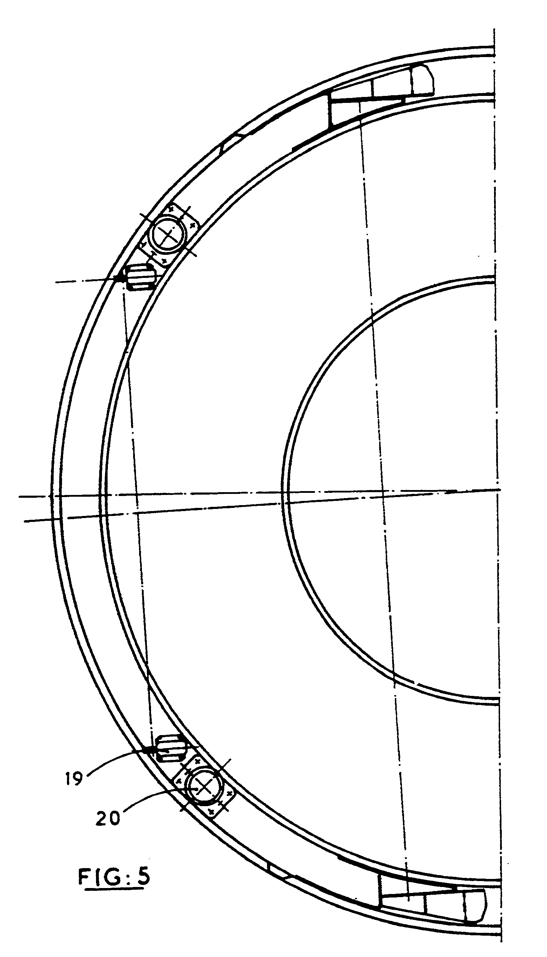

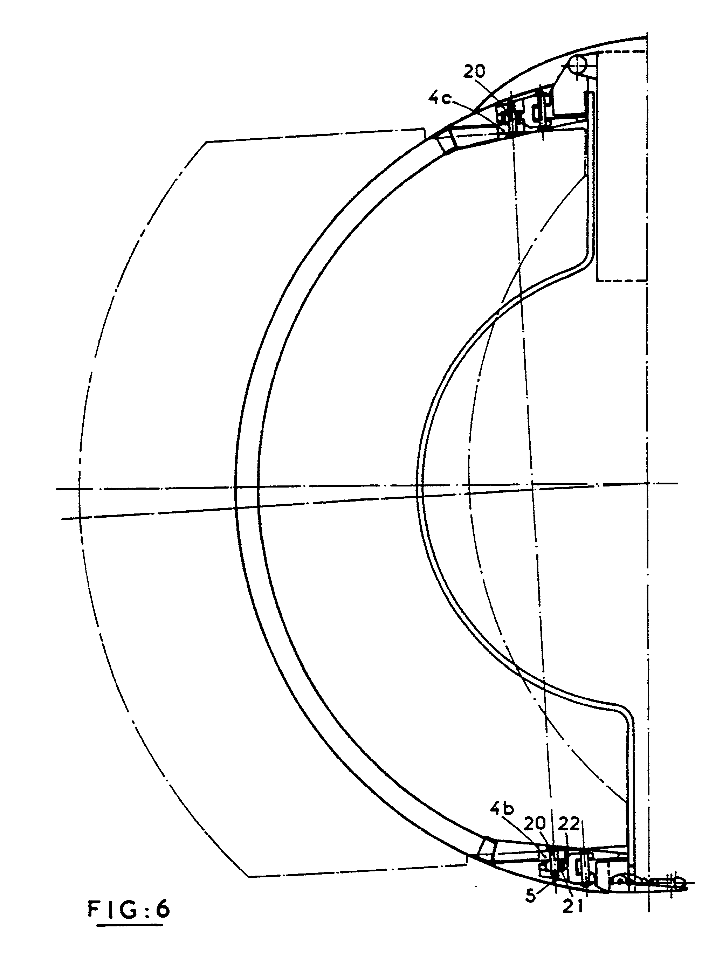

L'inverseur de poussée conforme à l'invention susceptible de dévier le flux secondaire d'un turboréacteur à double flux, représenté aux figures 1 à 4, comporte une partie fixe amont 1 qui est située dans le prolongement de la paroi externe du canal secondaire où circule ledit flux secondaire, alimenté par exemple, par une soufflante située à l'amont du turboréacteur, de manière connue et qui n'a pas été représentée aux dessins. Il comporte également une structure complémentaire fixe 2 et une partie mobile 3 composée de plusieurs éléments déplaçables qui, dans le mode de réalisation représenté, sont constitués par deux portes basculantes 4. Bien entendu, l'invention s'applique également directement, par de simples adaptations à la portée évidente d'un homme du métier et complémentaires de l'invention, à d'autres modes de réalisation connus d'inverseur de poussée dans lesquels les éléments déplaçables de la partie mobile 3 sont constitués ou par des coquilles ou par un nombre de portes basculantes supérieur à deux. Une telle porte 4 est représentée à la figure 1 en position déployée, correspondant à une inversion de poussée par déviation du flux secondaire. Chaque bord latéral d'une porte 4 est relié à ladite structure fixe 2 d'inverseur par des pivots primaires 5 dont l'emplacement est représenté sur les figures 2 et 3. Chaque porte 4 comporte un panneau interne 6 dont la face interne prolonge à l'arrière la paroi interne 7 de la partie fixe amont 1 de l'inverseur formant ainsi dans la position rétractée représentée à la figure 2 une paroi externe aérodynamique continue de la veine du flux secondaire symbolisé par la flèche 8, un panneau externe 9 se raccordant dans cette même position, en amont, à la paroi externe 10 de la partie fixe amont 1, formant ainsi une paroi de délimitation aérodynamique continue du flux extérieur symbolisé par la flèche 11, et une structure intérieure 12 de liaison entre lesdits panneaux 6 et 9. Sur la partie fixe amont 1 de l'inverseur est fixé un vérin primaire 13 dont l'extrémité de la tige 14 est reliée à une articulation 15, supportée, par exemple, par ladite structure intérieure 12 de la porte 4 d'inverseur. Pour passer à la position déployée, représentée à la figure 3, le vérin 13 agit sur la porte 4, commandant ses déplacements pour la faire basculer autour des pivots primaires 5, dans une position où son extrémité aval 4a vient rencontrer la surface du capot primaire 16 formant la paroi intérieur du canal annulaire d'éjection du flux secondaire qui se trouve ainsi dévié selon la flèche 17 en procurant une inversion de poussée dont les performances sont assurées par le profil adapté de la face interne 6 de la porte 4. Comme cela est représenté plus en détails sur les figures 4 et 5, dans la position rétractée de la figure 2, la partie amont de la porte 4 est verrouillée sur une structure fixe 18 de l'inverseur par un verrou 19, ledit verrou 19 étant libéré lorsque le vérin 13 entre en action pour déplacer la porte 4 en position déployée, telle qu'elle est montrée à la figure 3. Les figures 4 et 6 montrent les détails de montage des pivots primaires 5 de la porte 4 d'inverseur. Un pivot primaire 5 est constitué d'un axe 20 solidaire d'un bord latéral, respectivement 4b et 4c, de la porte 4. Cet axe 20 s'articule au moyen d'une rotule 21 sur une extrémité d'une biellette-support 22 dont l'autre extrémité est reliée de manière articulée à la structure fixe 18 de l'inverseur. L'extrémité de la tige d'un vérin secondaire 23 dont l'autre extrémité est fixée sur ladite structure fixe 18 de l'inverseur est articulée sur ladite biellette-support 22. Ladite biellette-support 22 est en outre susceptible de coopérer avec un verrou de blocage 24 qui est solidaire de ladite structure fixe 18 de l'inverseur.

Le fonctionnement de l'inverseur de poussée de turboréacteur à double flux conforme à l'invention qui vient d'être décrit se déduit de ladite description. En position rétractée, représentée à la figure 2, correspondant à un fonctionnement en poussée directe du turboréacteur, lors d'une phase en croisière de l'avion notamment, les portes 4 sont verrouillées en amont par les verrous 19, les biellettes-supports 22 des pivots primaires 5 sont également bloquées par les verrous 24, les tiges des vérins primaires 13 et des vérins secondaires 23 sont respectivement rentrées.

En position déployée, représentée à la figure 3, correspondant à un fonctionnement en inversion de poussée de turboréacteur, lors d'une phase de freinage de l'avion notamment, les verrous 19 sont libérés, les tiges des vérins primaires 13 sont sorties, effectuant un pivotement des portes basculantes 4 autour des pivots primaires 5, sans déplacement ni des biellettes-supports 22, ni de la tige des vérins secondaires 23.

Dans la position, représentée à la figure 4, correspondant à une variation de la section de tuyère, lors d'une phase de décollage de l'avion notamment, les portes 4 restant solidarisées en amont des verrous 19 et les tiges des vérins primaires 13 sont rentrées mais les verrous 24 sont libérés et sous l'action des vérins secondaires 23, les biellettes-supports 22 sont déplacées, provoquant ainsi un déplacement des pivots principaux 5, pendant que les portes 4 pivotent autour des pivots secondaires constitués en amont par les verrous 19, déplaçant ainsi l'extrémité aval 4a des portes 4 et augmentant la section correspondante de sortie de tuyère, en passant de la position A à la position B représentées sur la figure 4.

Les dispositions conformes à l'invention qui ont été décrites procurent de nombreux avantages et notamment :

— l'utilisation de deux vérins distincts (vérin primaire 13 pour le pivotement des portes 4 autour des pivots primaires 5 et vérin secondaire 23 pour le déplacement des portes 4 autour des pivots secondaires 19) rend indépendantes les deux fonctions obtenues d'inversion de poussée, d'une part, et d'augmentation de section de tuyère, d'autre part, ces commandes séparées permettant d'améliorer les temps de réponse ;

— en position de variation de section de tuyère, aucune saillie, ni ouverture importante entre parties fixes et parties mobiles ne vient altérer les lignes aérodynamiques externe ou interne qui restent sensiblement continues, ce qui améliore le rendement aérodynamique ;

— la solution proposée par l'invention aboutit en outre à une structure simple des dispositifs de réalisation de la cinématique des déplacements de porte et évite notamment tout système complexe à renvois multiples dont la fiabilité serait moins bonne ;

— ces dispositions permettent également d'obtenir les déplacements souhaités de porte en imposant aux organes mobiles (pivots secondaires 19 par exemple) des mouvements relatifs de faible amplitude, ce qui améliore également la fiabilité et l'obtention de temps de réponse réduits.

## Revendications

1. Inverseur de poussée d'un turboréacteur à double flux comportant des éléments déplaçables (4) constitués de portes ou de coquilles susceptibles de pivoter autour de pivots primaires (5) latéraux fixés sur la structure fixe de l'inverseur et formant, en position rétractée, correspondant au fonctionnement du turboréacteur en poussée directe l'extrémité aval de la paroi externe du canal annulaire de circulation de la veine de flux secondaire (8) et, en position déployée des obstacles de déviation du flux secondaire (17), correspondant à un fonctionnement en inversion de poussée, les déplacements étant obtenus au moyen d'un système de commande comportant des vérins primaires (13) fixés en amont sur la partie fixe (1) amont de l'inverseur caractérisé en ce que chaque élément déplaçable (4) est relié par sa partie amont, en position rétractée, à la partie fixe amont de l'inverseur par un pivot secondaire (19) et en ce que chaque pivot primaire (5) est relié à la structure fixe de l'inverseur par une biellette-support (22) dont l'autre extrémité est articulée à l'extrémité de la tige d'un vérin secondaire (23) fixé en amont sur la structure fixe de l'inverseur de manière à obtenir une variation de la section de sortie de la tuyère secondaire d'éjection correspondant à l'extrémité aval desdits éléments déplaçables (4) sous l'action desdits vérins secondaires (23) par déplacement desdits pivots primaires (5).

2. Inverseur de poussée d'un turboréacteur à double flux selon la revendication 1 caractérisé en ce que ledit pivot secondaire (19) constitue un verrou de l'élément déplaçable en position rétractée, ledit élément déplaçable (4) étant libéré dudit verrou (19), pour passer à la position déployée, sous l'action du vérin primaire (13) de commande des déplacements.

3. Inverseur de poussée d'un turboréacteur à double flux selon l'une des revendications 1 ou 2 caractérisé en ce que, dans les positions déployée et rétractée sans variation de la section de tuyère, ladite biellette-support (22) du pivot primaire (5) est bloquée par rapport à la structure fixe de l'inverseur par un verrou (24), ladite biellette-support (22) se libérant dudit verrou (24) en position de variation de la section de tuyère sous l'action dudit vérin secondaire (23).

4. Inverseur de poussée d'un turboréacteur à double flux selon l'une quelconque des revendications 1 à 3 caractérisé en ce que lesdits éléments déplaçables sont constitués par deux portes (4) d'inverseur.

## Patentansprüche

1. Schubumkehrvorrichtung für ein Zweistrom-Turboluftstrahltriebwerk mit aus Klappen oder Schalen bestehenden beweglichen Elementen (4), die um an der festen Struktur der Schubumkehrvorrichtung befestigte primäre seitliche Gelenkzapfen (S) verschwenkbar sind und in der dem Direktschub-Betrieb des Strahltriebwerks entsprechenden eingezogenen Stellung den stromabwärtigen Endbereich der Außenwand des ringförmigen Zirkulationskanals des Sekundärstroms (8) bilden und in der dem Schubumkehr-Betrieb entsprechenden ausgefahrenen Stellung Hindernisse zur Umlenkung des Sekundärstroms bilden, wobei die Bewegungen dieser Elemente mit Hilfe eines Steuersystems bewirkt werden, das primäre Antriebszylinder aufweist, die mit ihrer stromaufwärtigen Seite an dem stromaufwärts der Schubumkehrvorrichtung liegenden festen Teil (1) befestigt sind, **dadurch gekennzeichnet, daß** jedes bewegliche Element (4) in der eingezogenen Stellung mit seinem stromaufwärtigen Teil über einen sekundären Gelenkzapfen (19) mit dem stromaufwärtigen festen Teil der Schubumkehrvorrichtung verbunden ist, und daß jeder primäre Gelenkzapfen (5) über einen Schwingarmträger (22) mit der festen Struktur der Schubumkehrvorrichtung verbunden ist, dessen anderes Ende an dem Ende der Stange eines sekundären Antriebszylinders (23) angelenkt ist, der mit seiner stromaufwärtigen Seite an der festen Struktur der Schubumkehrvorrichtung so befestigt ist, daß durch die von den genannten sekundären Antriebszylindern (23) bewirkte Verschiebung der primären Gelenkzapfen (5) eine Änderung des Austrittsquerschnitts der dem stromabwärtigen Endbereich der beweglichen Elemente (4) entsprechenden sekundären Auswurfdüse erreicht wird.

2. Schubumkehrvorrichtung für ein Zweistrom-Turboluftstrahltriebwerk nach Anspruch 1, dadurch gekennzeichnet, daß der sekundäre Gelenkzapfen (19) einen Riegel für das bewegliche Element bildet, wenn dieses sich in eingezogener Stellung befindet, wobei das bewegliche Element (4) für den Übergang in seine ausgefahrene Stellung durch die Einwirkung des zur teuerung der Verschiebungen dienenden primären Antriebszylinders (13) von dem Riegel (19) gelöst wird.

3. Schubumkehrvorrichtung für ein Zweistrom-Turboluftstrahltriebwerk nach Anspruch 1 oder 2, dadurch gekennzeichnet, daß der Schwingarmträger (22) des primären Gelenkzapfens (5) in der ausgefahrenen Stellung und in der eingezogenen Stellung ohne Querschnittsänderung der Düse gegenüber der festen Struktur der Schubumkehrvorrichtung durch einen Riegel (24) blockiert ist und daß der Schwingarmträger (22) durch die Einwirkung des sekundären Antriebszylinders (23) von dem Riegel (24) gelöst und in eine Stellung geführt wird, in der Querschnitt der Düse verändert ist.

4. Schubumkehrvorrichtung für ein Zweistrom-Turboluftstrahltriebwerk nach einem der Ansprüche 1 bis 3, dadurch gekennzeichnet, daß die beweglichen Elemente aus zwei Schubumkehrklappen (4) bestehen.

## Claims

1. Thrust reverser for a bypass turbojet engine comprising movable elements (4) constituted by eyelid or clamshell shutters capable of pivoting about lateral primary pivots (5) fixed to the fixed structure of the thrust reverser and forming, in the retracted position corresponding to the turbojet engine functioning in direct thrust mode, the downstream extremity of the outer wall of the annular duct for the circulation of the secondary airflow (8) and, in the deployed position, deflectors diverting the secondary airflow (17), corresponding to operation in reverse thrust mode, the displacements being obtained by a control system comprising primary rams (13) fixed upstream to the fixed upstream part (1) of the thrust reverser, characterised in that each movable element (4) is connected by its upstream part, when in the retracted position, to the fixed upstream part of the thrust reverser by a secondary pivot (19) and in that each primary pivot (5) is connected to the fixed structure of the thrust reverser by a supporting linkage (22) whose other end is articulated at the end of the actuating rod of a secondary ram (23) fixed upstream on the fixed structure of the thrust reverser in such a way as to obtain a variation in the cross section of the thrust nozzle outlet corresponding to the downstream extremity of the said movable elements (4) under the action of the said secondary rams (23) causing the displacement of the said primary pivots (5).

2. Thrust reverser for a bypass turbojet engine in accordance with Claim 1, characterised in that the said secondary pivot (19) constitutes a latch for the movable element in the retracted position, the said movable element (4) being released from the said latch (19) in order to move into the deployed position under the action of the primary ram (13) controlling the movements.

3. Thrust reverser for a bypass turbojet engine in accordance with either of Claims 1 or 2, characterised in that in the deployed and retracted positions without variation of the cross section of the nozzle, the said supporting linkage (22) of the primary pivot (5) is locked in relation to the fixed structure of the thrust reverser by a latch (24) the said supporting linkage (22) being released from the said latch in the position for varying the cross section of the nozzle under the action of the said secondary ram (23).

4. Thrust reverser for a bypass turbojet engine in accordance with any of Claims 1 to 3, characterised in that the said movable elements are made up of two thrust reversing shutters (4).

FIG: 1

FIG: 4

FIG: 2

FIG:3

FIG: 5

FIG:6